# EUROPÄISCHE PATENTSCHRIFT

(11) **EP 1 818 891 B1**
(45) Veröffentlichungstag und Bekanntmachung des Hinweises auf die Patenterteilung: **30.11.2011**
(21) Anmeldenummer: 07002513.5
(22) Anmeldetag: 06.02.2007
(51) Int. Cl.: G08G 5/02

(54) **Führungseinrichtung und Verfahren zur Anflugführung von Luftfahrzeugen**
Guiding device and method for aircraft approach
Dispositif et procédé de guidage d'aéronefs pour l'approche

(30) Priorität: 14.02.2006 DE 102006006972
(43) Veröffentlichungstag der Anmeldung: 15.08.2007
(73) Patentinhaber: Deutsches Zentrum für Luft- und Raumfahrt e.V., 51147 Köln (DE)
(72) Erfinder: Temme, Marco-Michael, 38108 Braunschweig (DE); Helmke, Hartmut, 38108 Braunschweig (DE)
(74) Vertreter: Gerstein, Hans Joachim

(56) Entgegenhaltungen:
- WO-A-02/095712
- WO-A-02/099769
- WO-A-2004/086333
- US-A1- 2003 167 109
- WEITZ L A ET AL: "An Analysis of Merging and Spacing Operations with Continuous Descent Approaches" DIGITAL AVIONICS SYSTEMS CONFERENCE, 2005. DASC 2005. THE 24TH WASHINGTON, DC, USA 30-03 OCT. 2005, PISCATAWAY, NJ, USA,IEEE, Bd. 1, 30. Oktober 2005 (2005-10-30), Seiten 2.C.3-1-2.C.3-11, XP010868220 ISBN: 978-0-7803-9307-3
- HSU C I ET AL: "Performance assessment for airport noise charge policies and airline network adjustment response" TRANSPORTATION RESEARCH PART D: TRANSPORT AND ENVIRONMENT, PERGAMON, Bd. 10, Nr. 4, 1. Juli 2005 (2005-07-01), Seiten 281-304, XP004935688 ISSN: 1361-9209

## Beschreibung

Die Erfindung betrifft ein Verfahren zur Anflugführung von Luftfahrzeugen, um eine Anzahl von Luftfahrzeugen durch Festlegung einer zur Reduzierung der Umgebungsbelastung optimierte Anflugfrequenz nacheinander zur Landung auf einem Flughafen zu führen.

Die Erfindung betrifft weiterhin eine Führungseinrichtung zur Anflugsteuerung von Luftfahrzeugen, um eine Anzahl von Luftfahrzeugen mit einem solchen Verfahren nacheinander zu mindestens einem Ziel-Wegpunkt eines Flughafens zu führen.

Durch den zunehmenden Luftverkehr wird es immer wichtiger, an den Flughäfen genügend Start- und Landekapazitäten für Luftfahrzeuge zur Verfügung zu stellen. Dies schafft aber auf der anderen Seite vermehrte Umwelt- und Lärmschutzprobleme. Durch den zunehmenden Luftverkehr wird die Umgebung einer größeren Umweltbelastung und einem größeren Fluglärm ausgesetzt. Dies betrifft vor allem Anwohner in unmittelbarer Umgebung von internationalen Großflughäfen und stark frequentierten Einflugschneisen.

Es gibt Bestrebungen, den Fluglärm durch Optimierung der An- und Abflugstrecken und durch optimierte Landeverfahren zu reduzieren. Allerdings ist es auch mit modernen Datenverarbeitungsanlagen und unter Verwendung modernster Optimierungsalgorithmen bislang nicht möglich, die An- und Abflugrouten in Echtzeit derart zu berechnen, dass die Umweltbelastung und der Fluglärm für die Umgebung insbesondere der Anwohner so gering wie möglich ist.

Zur Reduzierung der Fluglärmbelastung im Anflug sind lärmreduzierte Flugverfahren bekannt, mit denen der Fluglärm während der Anflugphase aktiv begrenzt wird.

Ein solches beispielsweise in DFS, Luftfahrthandbuch Deuschland - Aeronautical Information Publication (AIP) Germany, monatlich erweitertes Luftfahrthandbuch, 2005, DFS Deutsche Flugsicherung GmbH, Langen, Deutschland beschriebenes, international anerkanntes Anflugverfahren ist das so genannte "Frankfurter Verfahren", auch Low-Drag-Low-Power-Approach genannt. Der Umströmungslärm und der Triebwerkschub werden auf ein Minimum reduziert, indem im Anflug die Landeklappen und das Fahrwerk möglichst spät ausgefahren werden. In dieser aerodynamischen Konfiguration kann der Fluglärm gegenüber einem Standardflug reduziert werden.

Weithin ist ein Verfahren bekannt, das als kontinuierliches Sinkflugverfahren (Continuous-Descent-Approach) bezeichnet wird. Hierbei wird im letzten Anflugsegment auf den horizontalen Anflugteil verzichtet, so dass sich das Flugzeug bis zum Aufsetzpunkt im kontinuierlichen Sink- bzw. Gleitflug befindet. Die Triebwerkleistung wird hierbei auf Leerlauf bzw. nahezu auf Leerlauf eingestellt. Damit kann der bei einem Anflug entstehende Triebwerklärm erheblich reduziert werden. Für das kontinuierliche Sinkflugverfahren ist allerdings eine ausreichend große freie Flugfläche erforderlich, da jedes Flugzeug ein anderes vom Gewicht und den aerodynamischen Eigenschaften abhängiges Sinkverhalten hat. Um einen kontinuierlichen Sinkflug bei einer Sequenz von in relativ kurzen Abständen nacheinander landenden Flugzeugen sicherzustellen, ist der Koordinationsaufwand erheblich. Das kontinuierliche Sinkflugverfahren ist in der Regel nur in verkehrsschwächeren Zeiten nutzbar.

Aus der WO 02/095712 A2 ist ein Verfahren zur zeitlichen Verwaltung eines Fluges einer Vielzahl von Flugzeugen gegenüber einer spezifizierten Systemressource durch ein Luftfahrtsystem bekannt. Hierzu werden spezifizierte Daten und Betriebsziele gesammelt und gespeichert und eine Zielfunktion spezifiziert, deren Wert ein Maß dafür ist, wie gut die genannte Systemressource und die Vielzahl von Flugzeugen ihr Betriebsziel erreichen, wenn die genannten Flugzeuge die vorgegebene Anflugsmarkenzeiten einhalten. Anfängliche Trajektorien werden berechnet, sobald ein Luftfahrzeug in der Luft ist. Anschließend wird die Genauigkeit der Trajektorie bestimmt und es wird eine Optimierung der Einzel-Anflugtrajektorie hinsichtlich der Zielfunktion durchgeführt.

Aus der WO 02/099769 ist ein Luftfahrtmanagementsystem bekannt, das trajektorienbasierte Fluss- und Flugplanungen durchführt. Unterschiedliche Kontroll-, Navigations- und Rettungssysteme werden mit Hilfe einer satellitenbasierten Kommunikation miteinander verbunden, um so eine sichere und effizientere Trajektorienplanung durchführen zu können.

In Weitz, L. A.; et al.: "An Analysis of Merging and spacing operations with continuous descent approaches", Digital Avionics Systems Conference, 2005 beschreibt das kontinuierliche Sinkflugverfahren (continuous descent approach) und zeigt auf, wie mit Hilfe dieses Verfahrens die Lärmbelastung der Umgebung eines Flughafens reduziert werden kann. So ergibt sich beispielsweise ein Hinweis darauf, dass 2°-CDA Anflüge nicht so optimal sind, wie 3°-CDA Anflüge, Nachteilig dabei ist jedoch insbesondere, dass das kontinuierliche Sinkflugverfahren nur außerhalb der Stoßzeiten anwendbar ist, da für dessen Erfolg ein Eingriff während des Sinkflugverfahrens in die Trajektorie nicht mehr möglich ist.

Zur lärmoptimierten Abflugplanung sind Offline-Arbeiten der Optimierungssysteme bekannt, mit denen die Abflugtrajektorien der Luftfahrzeuge so gestaltet werden, dass sie hinsichtlich eines Lärmkriteriums eine minimale Belastung der Bevölkerung sicherstellen. Dies ist jedoch nur deshalb möglich, weil die Abflugrouten eine geringere Streuung besitzen als die Anflugrouten. Die Abflugrouten können nämlich immer über vorher festgelegte Trajektorien mit definierten Wegpunkten und Strecken geführt werden.

Eine solche Abflugsteuerung ist in "Fluglärm begrenzen - ein Unternehmensziel der DFS", HRSG: DFS Deutsche Flugsicherung GmbH, Offenbach, November 2000 (www.dfs.de) beschrieben.

Aus U. Isermann, O. Boguhn, C. Henkel, T. Kowalski, R. Schmid: "Simulationsverfahren zur Fluglärmprognose", DLR, Köln-Porz, 16. März 2004 ist ein EDV-gestütztes Verfahren zur Berechnung der Fluglärmemission am Boden beschrieben, das die maßgeblichen physikalischen Effekte bei der Schallemisionen-Ausbreitung der startenden und landenden Flugzeuge berücksichtigt. Das Fluglärmprognoseverfahren kann zur Optimierung von lärmarmen Flugverfahren genutzt werden. Die Fluglärmbelastung am Boden wird durch Quellenmodelle und Schallausbreitungsmodelle berechnet. Hierzu werden Flugzeugtypen spezifische akustische Basisdaten, wie Spektrum und Richtcharakteristik sowie Flugleistungsdaten, topografische und meteorologische Daten und Flugbahndaten miteinander korreliert.

Eine Echtzeitoptimierung von Anflugtrajektorien ist allerdings mit den bekannten Verfahren nicht möglich, da die Anflugtrajektorien eine wesentlich höhere Streuung besitzen, als die Abflugtrajektorien und der erforderliche Rechenaufwand selbst mit heutigen Hochleistungsrechnern nicht beherrschbar ist.

Unter Trajektorien im Sinne der Erfindung wird dabei eine dreidimensionale Flugbahn verstanden, die durch eine bestimmte Menge von über einer bestimmten Zeit abzufliegenden Wegpunkten gekennzeichnet ist. Eine Anflugtrajektorie wird daher auch als vierdimensionaler Weg bezeichnet, der ein Luftfahrzeug von seiner gegenwärtigen Position unter Berücksichtigung von vorgegebenen Randbedingungen, wie beispielsweise Überflugzeiten und -höhen an bestimmten Wegpunkten und der aktuellen Windvorhersage bis zur Landbahnschwelle führt. Aus solchen Trajektorien können dann unmittelbare Führungshinweise für die Lotsen und Steuerungsbefehle für die Luftfahrzeuge abgeleitet werden. Die Führungsanweisungen können dann direkt per Datenübertragung an den Bordcomputer des Luftfahrzeuges zur Leitung desselben auf die Landbahnschwelle übertragen werden.

Herkömmliche Lotsenunterstützungssysteme für den Anflug (Arrival Manager) unterstützen die Anfluglotsen heute an vielen großen Verkehrsflughäfen bei der Führung des anfliegenden Verkehrs. Neben einem reibungslosen Ablauf stehen dabei Sicherheit, Pünktlichkeit, Ausnutzung von Infrastrukturkapazitäten und Vermeidung von Warteschleifen im Vordergrund. Die Lotsen steuern den Verkehr mittels Sprechfunkanweisung oder Datenfunk durch Vorgabe von Flugrichtung, Geschwindigkeit und Flughöhe (so genanntes Radar-Vektoring). Dabei ist es kaum möglich, für die Luftfahrzeuge gezielt Strecken innerhalb der gegebenen Luftraumstruktur auszuwählen, die die Umwelt- und Fluglärmbelastung für die Anwohner in der Umgebung des Flughafens gering halten.

Aufgabe der vorliegenden Erfindung ist es daher, ein verbessertes Verfahren zur Anflugführung von Luftfahrzeugen zu schaffen, mit dem in Echtzeit Steuerungsanweisungen berechnet werden, um unter reduzierter Belastung der Umgebung eine Anzahl von Luftfahrzeugen durch Festlegung einer Anflugsequenz nacheinander zur Landung auf einen Flughafen zu führen.

Die Aufgabe wird mit dem Verfahren der eingangs genannten Art erfindungsgemäß gelöst durch die Schritte:
a) Zuordnen einer möglichen Anflugtrajektorie aus der Menge von hinsichtlich der Umgebungsbelastung vorberechneten, vorgegebenen Anflugtrajektorien, erfolgt vorzugsweise eine Bildung einer möglichen Anflugsequenz mit möglichen zweidimensionalen Anflugwegen für jedes Luftfahrzeug und ein Ableiten der Zielzeiten und daraus resultierenden Restflugzeiten von einem Ausgans-Wegpunkt zu einem Ziel-Wegpunkt für jedes Luftfahrzeug der Sequenz. Damit werden zunächst die Randbedingungen ausgewertet, um anschließend die möglichen Anflugtrajektorien den einzelnen Luftfahrzeugen aus der Menge von vorgegebenen Anflugtrajektorien zuordnen zu können;
b) Bestimmen einer Umgebungsbelastung durch die Anflugssequenz von Luftfahrzeugen bei Nutzung der jeweils zugeordneten Anflugtrajektorie in Abhängigkeit von vorbestimmten Umgebungsbelastungskennzahlen der Anflugtrajektorien als Parameter der Umgebungsbelastung durch den Anflug auf dem entsprechenden Anflugweg,
c) Anpassen der Anflugsequenz und Wiederholen der Schritte a) und b) zur Ermittlung einer optimalen Anflugsequenz mit reduzierter Umgebungsbelastung und
d) Führen der Luftfahrzeuge in Abhängigkeit von der resultierenden belastungsoptimierten Anflugsequenz.

Bei dem Verfahren wird die zu erwartende Lärmbelastung auf Basis der vorgegebenen Restflugzeiten einer zu überprüfenden Anflugsequenz geschätzt, wobei die Lärmbewertung einer Anflugtrajektorie aus Einträgen einer Datenbank über die geplante Restflugzeit approximiert wird. Die Datenbank kann dabei so kompakt gehalten werden, dass der Fluglärm bei der Führung des anfliegenden Luftverkehrs insbesondere für Flugzeuge und Hubschrauber in Abhängigkeit von der aktuellen Verkehrssituation berücksichtigt, eingeplant und reduziert werden kann. Das Verfahren nutzt die Möglichkeit, dass aus der vorgegebenen Restflugzeit für ein Luftfahrzeug auf die Länge der zu fliegenden Trajektorie und damit auf die Anflugtrajektorie selbst geschlossen werden kann. Hierdurch lässt sich die für eine alle Trajektorien abdeckende Lärmabschätzung benötigte Datenmenge erheblich reduzieren.

Bereits bei der Planung von Anflugsequenzen können die geplanten Restflugzeiten bzw. Zielzeiten an der Landebahnschwelle als möglicher Ziel-Wegpunkt so präzise vorherbestimmt werden, dass sich hieraus zwingend eine Anflugtrajektorie von einem Flugzeugtyp ergibt. Es hat sich gezeigt, dass die tatsächliche Umgebungsbelastung bei einem Anflug eines Luftfahrzeugs, das zu einem bestimmten Zielzeitpunkt auf der Landebahnschwelle eines Flughafens aufsetzen soll, eine Umgebungsbelastung bewirkt, die vergleichbar mit der in einer Datenbank abgelegten Umgebungsbelastungskennzahl für vorgegebene Anflugtrajektorien ist. Damit lässt sich die Umgebungsbelastung relativ präzise vorhersagen (schätzen). Das Verfahren unterscheidet sich von der herkömmlichen Anflugsteuerung, die folgende Schritte vorsieht:
1) Bestimmung einer Anflugsequenz mit einer Festlegung der Reihenfolge, in der die Luftfahrzeuge auf einem Flughafen landen sollen;
2) Bestimmen einer Zielzeit (Landezeit) für jedes Luftfahrzeug aus der zuvor bestimmten Anflugsequenz;
3) Bestimmung einer 4D-Anflugtrajektorie, die ein Flugzeug von seiner gegenwärtigen Position zur vorgegebenen Zielzeit zur Landebahnschwelle führt, wobei eine Liste von aufeinander folgenden zu überfliegenden Wegpunkten zusammengestellt wird und für jeden Wegpunkt die Höhe, Geschwindigkeit und Zeit des Luftfahrzeugs an dem Wegpunkt angegeben wird;
4) Bestimmung von Steuerungsanweisungen für das Luftfahrzeug auf Basis der zuvor ermittelten Anflugtrajektorie.

Zur Bestimmung der Anflugsequenz im Schritt 1) werden üblicherweise verschiedene Sequenzen der Luftfahrzeuge probiert, nach unterschiedlichen Kriterien bewertet und die am besten bewertete Sequenz wird dann ausgewählt.

Bei dem vorliegenden Verfahren werden die Schritte 1) bis 4) beibehalten, wobei die belastungsoptimierte Festlegung der Anflugsequenzen allein aus Kenntnis der Zielzeit aus Schritt 2) bzw. der damit zusammenhängenden Restflugzeit und Bewertung der vorbestimmten Umgebungsbelastungskennzahlen der eineindeutig der Restflugzeit zuzuordnenden Anflugtrajektorie approximiert wird.

Vor dem Schritt a) erfolgt vorzugsweise eine Bildung einer möglichen Anflugsequenz mit möglichen zweidimensionalen Anflugwegen (ohne Berücksichtigung der Flughöhen, d.h. in einer Draufsicht-Projektion auf das Flughafenanfluggebiet) für jedes Luftfahrzeug. Dann werden für jedes Luftfahrzeug der gebildeten und zu untersuchenden Anflugsequenz die Zielzeiten und Restflugzeiten von einem Ausgangs-Wegpunkt, z.B. ein "Metering Fix", zu einem Ziel-Wegpunkt, z.B. die "Landebahnschwelle", beispielsweise aus der geplanten oder aktuellen Luftfahrzeugposition, der Fluggeschwindigkeit, dem Flugzeugtyp etc. abgeleitet.

Nach der umgebungsbelastungsoptimierten Festlegung der geplanten Anflugsequenzen erfolgt vorzugsweise eine Bestimmung von tatsächlich zu nutzenden Anflugtrajektorien für die Luftfahrzeuge in Abhängigkeit von den Zielzeiten der umgebungsbelastungsoptimierten Anflugsequenz. Die tatsächlich genutzten Anflugtrajektorien können von den vorgegebenen Anflugtrajektorien für die resultierende belastungsoptimierte Anflugsequenz abweichen. Die Luftfahrzeuge werden dann in der Anflugsequenz über die bestimmten Anflugtrajektorien so geleitet, dass diese zu den mit den in der Anflugsequenz verknüpften Zielzeiten auf der Landebahnschwelle aufsetzen. Damit kann der tatsächliche Luftverkehr über eine unbeschränkte Anzahl von Anflugtrajektorien unabhängig von der eingeschränkten Anzahl vorbestimmter Anflugtrajektorien geleitet und der Flugraum optimal ausgenutzt werden. Auch wenn es zu geringen Abweichungen zwischen tatsächlicher und geschätzter Umgebungsbelastungskennzahl kommt, so sind die gefundenen Sequenzen im Mittel jedoch bezüglich des Lärmkriteriums wesentlich besser zu bewerten als ohne Berücksichtigung des Lärmkriteriums. Letzteres wäre ohne die Verwendung des oben beschriebenen Verfahrens zur Echtzeit-Lärmabschätzung unumgänglich gewesen.

Die Umgebungsbelastungskennzahlen der vorgegebenen Anflugtrajektorien werden vorzugsweise in Abhängigkeit von der Bevölkerungsdichte und/oder der Geländetopografie bezogen auf die Anflugtrajektorien bestimmt. Die Umgebungsbelastungskennzahlen können auch in Abhängigkeit von Luftfahrzeugtypen und/oder meteorologischen Parametern bestimmt werden. So kann für jede Anflugtrajektorie eine Mehrzahl von Umgebungsbelastungskennzahlen als Funktion des Luftfahrzeugtyps und/oder den Wetterbedingungen etc. vorgehalten werden.

Um eine eineindeutige Zuordnung einer Restflugzeit zu einer vorgegebenen Anflugtrajektorie zu ermöglichen ist es vorteilhaft, wenn die vorgegebenen Anflugtrajektorien voneinander unterschiedliche Weglängen zwischen Wegpunkt und Landebahnschwelle aufweisen. Das heißt, dass die Anflugtrajektorien sich in ihrer Länge zwingend unterscheiden und keine Anflugtrajektorien mit gleicher Länge in der Datenbank aufgenommen sind. Die eineindeutige Zuordnung einer Restflugzeit zu einer Anflugtrajektorie erfolgt dann über die bekannten Weglängen der Anflugtrajektorie und der Wegstrecke, die ein Luftfahrzeug bei einer durch ein Anflugverfahren vorgegebenen luftfahrzeugtypenabhängigen Geschwindigkeit zum Anflug zwischen gemeinsamem Ausgangs-Wegpunkt und Ziel-Wegpunkt in der Restflugzeit benötigt. Die Restflugzeit bzw. die erforderliche Wegstrecke wird somit vorzugsweise in Abhängigkeit von dem Luftfahrzeugtyp bestimmt.

Die Umgebungsbelastungskennzahlen beschreiben vorzugsweise die Lärmbelastung der Umgebung bei Anflug auf einer zugeordneten Anflugtrajektorie. Diese Lärmbelastung kann gegebenenfalls vom Flugzeugtyp abhängig sein. Es ist aber auch denkbar, dass die Umgebungsbelastungskenngröße zusätzlich oder alternativ hierzu andere Umwelteinflüsse beschreibt, wie zum Beispiel die Schadstoffbelastung der Umgebung.

Eine Gruppe von vorgegebenen Anflugtrajektorien basiert auf einem gemeinsamen Ausgangs-Wegpunkt. Selbstverständlich kann das Verfahren aber auch für Flughäfen mit zwei oder mehr festgelegten gemeinsamen Ausgangs-Wegpunkten ausgeführt werden. Dann wird pro gemeinsamen Ausgangs-Wegpunkt jeweils eine Gruppe vordefinierter Anflugtrajektorien vorgegeben.

Aufgabe der vorliegenden Erfindung ist es weiterhin, eine Führungseinrichtung zur belastungsoptimierten Anflugführung von Luftfahrzeugen zu schaffen, um eine Anzahl von Luftfahrzeugen mit dem oben beschriebenen Verfahren nacheinander zu mindestens einem Ziel-Wegpunkt eines Flughafens zu führen.

Die Aufgabe wird mit der Führungseinrichtung der eingangs genannten Art gelöst durch
- einen Datenspeicher zum Abspeichern einer Anzahl vordefinierter Anflugtrajektorien, die jeweils einen Anflugweg von einem gemeinsamen Ausgangs-Wegpunkt zu einem Ziel-Wegpunkt des Flughafens beschreiben, und den Anflugtrajektorien zugeordneter Umgebungsbelastungskennzahlen als Parameter der Umgebungsbelastung durch den Anflug auf dem entsprechenden Anflugweg,
- eine Recheneinheit zur Zuordnung einer möglichen Anflugtrajektorie aus der Menge der vorgegebenen Anflugtrajektorien zu jedem Luftfahrzeug in Abhängigkeit von der Restflugzeit, die das Luftfahrzeug für die Strecke zwischen Ausgangs-Wegpunkt und Ziel-Wegpunkt benötigt, Bestimmung einer Umgebungsbelastung durch die Anflugsequenz von Luftfahrzeugen bei Nutzung der jeweils zugeordneten Anflugtrajektorien in Abhängigkeit von den Umgebungsbelastungskennzahlen der Anflugtrajektorien, und Anpassung der Anflugsequenz und Wiederholung der Schritte der Zuordnung von möglichen Anflugtrajektorien und Bestimmung der Umgebungsbelastung, um eine optimierte Anflugsequenz mit reduzierter Umgebungsbelastung zu ermitteln, und
- einer Führungseinheit zur Führung der Luftfahrzeuge in Abhängigkeit von der resultierenden belastungsoptimierten Anflugsequenz.

Die für alle Anflugtrajektorien zur Abschätzung der Umgebungsbelastung benötigte Datenmenge lässt sich dadurch reduzieren, dass aus der vorgegebenen Restflugzeit für ein Luftfahrzeug auf die Länge der zu fliegenden Anflugtrajektorie und damit auf die Anflugtrajektorie selbst geschlossen werden kann. Dann müssen nur noch die vorherbestimmten Umgebungsbelastungskennzahlen ausgewertet werden, um eine belastungsoptimierte Anflugsequenz zu finden.

Die Führungseinheit hat vorzugsweise ein Datenfunkmodul zur Übertragung von eine Anflugtrajektorie beschreibende Daten an Luftfahrzeuge zur Führung derselben.

Die Erfindung wird nachfolgend anhand eines Ausführungsbeispiels mit den beigefügten Zeichnungen näher erläutert. Es zeigen:
- Figur 1 -: Flussdiagramm des Verfahrens zur Anflugführung von Luftfahrzeugen;
- Figur 2 -: Blockdiagramm einer Leiteinrichtung zur Anflugführung von Luftfahrzeugen;
- Figur 3 -: Skizze von Anflugtrajektorien von Wegpunkten auf Ladebahnschwellen eines Flughafens als Draufsicht.
- Figur 4 -: Diagramm unterschiedlicher Anflugtrajektorien mit ansteigender Restflugzeit

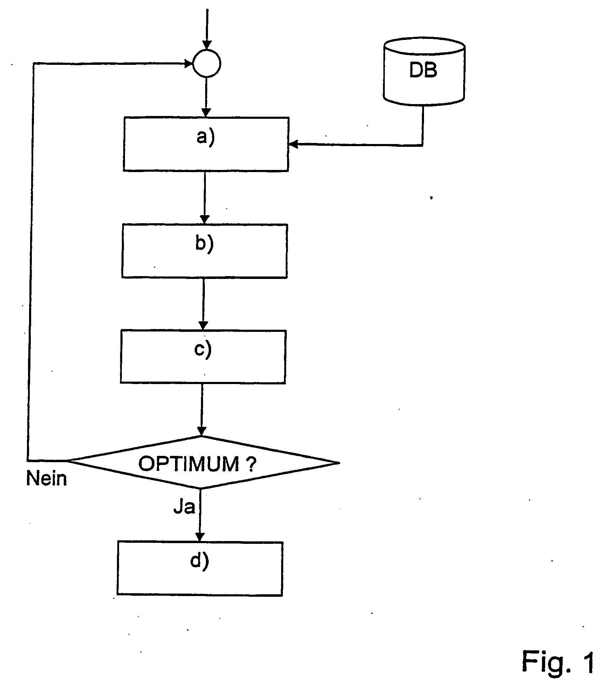

Die Figur 1 lässt ein Blockdiagramm des Verfahrens zur Anflugführung von Luftfahrzeugen erkennen, mit dem eine Anzahl von Luftfahrzeugen durch Festlegung einer Anflugsequenz mit Zielzeiten für die Anzahl von Luftfahrzeugen zu vorgegebenen Zielzeiten nacheinander zur Landung auf einen Flughafen geführt werden.

Die Zielzeiten werden den Luftfahrzeugen als Steuerungssignal vorgegeben. Ausgehend von einem definierten Ausgangs-Wegpunkt, den das Luftfahrzeug zu einer festgelegten Zeit erreicht, und gegebenenfalls einem vorgegebenen Landeverfahren wird das Luftfahrzeug dann über eine geeignete Anflugtrajektorie so zu einem Ziel-Wegpunkt, bspw. der Landebahnschwelle geleitet, dass es zu der vorgegebenen Zielzeit auf der Landebahnschwelle aufsetzt.

Das Verfahren nutzt eine Datenbank DB, in der eine Anzahl vordefinierter Anflugtrajektorien in Verbindung mit Anflugtrajektorien jeweils zugeordneten Umgebungsbelastungskennzahlen abgespeichert sind. Für jede Anflugtrajektorie kann eine Anzahl von Umgebungsbelastungskennzahlen beispielsweise in Abhängigkeit von einem Flugzeugtyp abgelegt sein. Die Umgebungsbelastungskennzahlen können zudem auch in Abhängigkeit von der Geländetopografie, der Bevölkerungsdichte, von meteorologischen Parametern etc. bestimmt werden.

Zur Erstellung der Datenbank wird eine Anzahl vordefinierter Anflugtrajektorien, die jeweils einen Anflugweg von einem gemeinsamen Wegpunkt zu einer Landebahnschwelle des Flughafens beschreiben, vorgegeben. Für jede Anflugtrajektorie wird jeweils mindestens eine Umgebungsbelastungskennzahl als Parameter der Umgebungsbelastung durch den Anflug auf dem entsprechenden Anflugweg bestimmt und in der Datenbank abgelegt.

Als Umgebungsbelastungskennzahlen können beispielsweise an sich bekannte normierte bevölkerungsabhängige Flugroutenbelastungskennzahlen FRBK genutzt werden, die eine Aussage über die Lärmbelastung der Umgebung zulassen. Beispielsweise kann die spezielle Flugroutenbelastungskennzahl FRBK zwischen den Werten 0 und 1 variieren, wobei die "1" hinsichtlich der Fluglärmbelastung die beste und die "0" die schlechteste Bewertung darstellt.

Eine Anflugsequenz für eine Anzahl von Luftfahrzeugen, die hinsichtlich einer reduzierten Umgebungsbelastung optimiert ist, kann wie folgt ermittelt werden.

In einem Schritt a) wird ausgehend von einer angenommenen Anflugsequenz für jede Zielzeit eines Luftfahrzeuges eine mögliche Anflugtrajektorie aus der Menge der vorgegebenen in der Datenbank DB abgespeicherten Anflugtrajektorien zu jedem Luftfahrzeug in Abhängigkeit von der Zielzeit und dem vorgegebenen Zeitpunkt, an dem das jeweilige Luftfahrzeug den gemeinsamen Ausgangs-Wegpunkt erreicht, zugeordnet. Das heißt, dass aus dem bekannten Zeitpunkt des Erreichens eines gemeinsamen Ausgangs-Wegpunktes und der durch die angenommene Anflugsequenz vorgegebenen Zielzeit des Aufsetzens auf der Landebahnschwelle eine Restflugzeit t_{R} feststeht, die in Verbindung mit einer flugzeugtypspezifisch bekannten, kaum variierenden Anfluggeschwindigkeit auch eine erforderliche Anflugweglänge definiert. Aus dieser Weglänge kann dann unmittelbar auf eine der vorgegebenen Anflugtrajektorien geschlossen werden, deren Länge mit der Anflugweglänge übereinstimmt. Um eine eineindeutige Zuordnung der Anflugtrajektorien zu erhalten, sind in der Datenbank vorzugsweise keine zwei Anflugtrajektorien verzeichnet, die eine gleiche Restflugzeit aufweisen.

In einem Schritt b) wird dann die Umgebungsbelastung bestimmt, die bei der Benutzung der im Schritt a) jeweils zugeordneten Anflugtrajektorien durch Luftfahrzeuge entsteht, wenn die Luftfahrzeuge in der angenommenen Anflugsequenz auf die Landebahnschwelle geführt werden. Die Umgebungsbelastung wird hierbei in Abhängigkeit von den vorbestimmten Umgebungsbelastungskennzahlen der jeweiligen Anflugtrajektorien ermittelt. Die Umgebungsbelastungskennzahlen sind hierbei Parameter der Umgebungsbelastung durch den Anflug auf dem entsprechenden Anflugweg.

Somit kann durch einfache Auswertung der in der Datenbank verzeichneten Umgebungsbelastungskennzahlen für die vorgegebenen Anflugtrajektorien ein Gesamtwert der Umgebungsbelastung bestimmt werden.

In einem Schritt c) wird die Anflugsequenz dann zufällig oder iterativ angepasst und die Schritte a) und b) werden für jede der angenommenen Anflugsequenzen wiederholt, um eine optimale Anflugsequenz mit reduzierter Umgebungsbelastung zu ermitteln. Die Optimierung kann bei Auffinden eines lokalen Minimums abgebrochen werden, wenn die Umgebungsbelastung der Anflugsequenz einen vorgegebenen Schwellwert unterschreitet. Es kann aber auch eine iterative Suche nach dem absoluten Minimum durchgeführt werden.

Nach Auffinden des relativen oder absoluten Optimums der Umgebungsbelastungsreduktion durch die Gruppe untersuchter Anflugsequenzen erfolgt im Schritt d) dann ein Führen der Luftfahrzeuge mit der resultierenden belastungsoptimierten Anflugsequenz und den dazugehörigen Zielzeiten.

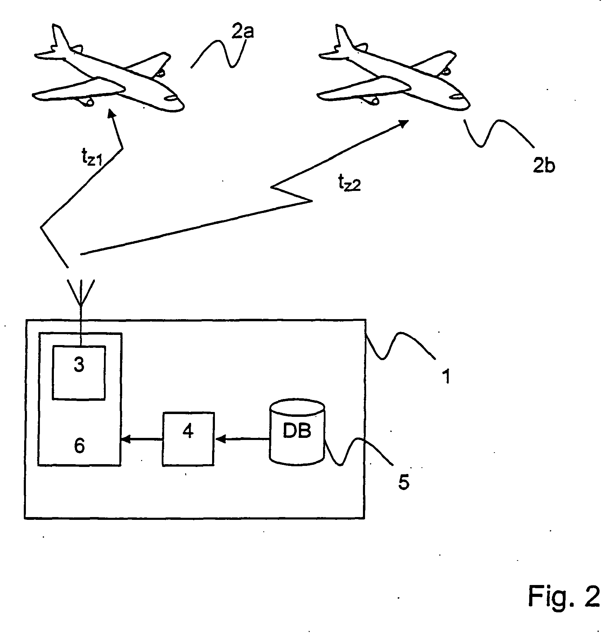

Die Figur 2 lässt eine hierzu geeignete Führungseinrichtung 1 zur Anflugführung einer Anzahl von Luftfahrzeugen 2a, 2b erkennen, die mit einem Datenfunkmodul 3 der Führungseinrichtung kommunizieren und mindestens durch Übertragung von Zielzeiten t_{z1}, t_{z2} an die Luftfahrzeuge 2a, 2b von der Führungseinrichtung 1 gesteuert werden.

Die Führungseinrichtung 1 hat eine Recheneinheit 4, um eine mögliche Anflugtrajektorie aus der Menge von vorgegebenen Anflugtrajektorien zu jedem Luftfahrzeug in Abhängigkeit von der Zielzeit t_{z} und dem vorgegebenen Zeitpunkt, an dem das Luftfahrzeug den gemeinsamen Ausgangs-Wegpunkt erreicht, zuzuordnen. Hierzu ist die Datenbank DB in einem Datenspeicher 5 abgelegt, in dem die Anzahl vordefinierter Anflugtrajektorien in Verbindung mit Umgebungsbelastungskennzahlen als Parameter der Umgebungsbelastung durch den Anflug auf der entsprechenden Anflugtrajektorie abgespeichert sind.

Die Recheneinheit 4 ist weiterhin zur Bestimmung einer Umgebungsbelastung mit Hilfe der in der Datenbank gespeicherten vorgegebenen Anflugtrajektorien und zugehörigen Umgebungsbelastungskennzahlen eingerichtet. Eine Umgebungsbelastungskennzahl ist hierbei ein Kennwert für die durch die Nutzung der jeweils zugeordneten Anflugtrajektorien durch die Luftfahrzeuge entstehenden Umweltbelastung, zum Beispiel Lärm, wenn diese in der angenommenen Anflugsequenz zur Landebahnschwelle des Flughafens geführt werden.

Die Recheneinheit 4 nimmt hierbei zur Optimierung der Anflugsequenz hinsichtlich einer reduzierten Belastung eine Anpassung der angenommenen Anflugsequenz vor und bestimmt die jeweilige Umgebungsbelastung der Anflugsequenz durch jeweilige Zuordnung der möglichen Anflugtrajektorien aus der Menge der vorgegebenen Anflugtrajektorien.

Nachdem eine hinsichtlich der Belastung optimale Anflugsequenz gefunden wurde, erfolgt dann mit einer Steuerungseinheit 6 beispielsweise in Verbindung mit dem Datenfunkmodul 3 eine Steuerung der Luftfahrzeuge 2, um diese in der resultierenden belastungsoptimierten Anflugsequenz und der durch die Anflugsequenz vorgegebenen Zielzeiten t_{z} auf die Landebahnschwelle zu führen.

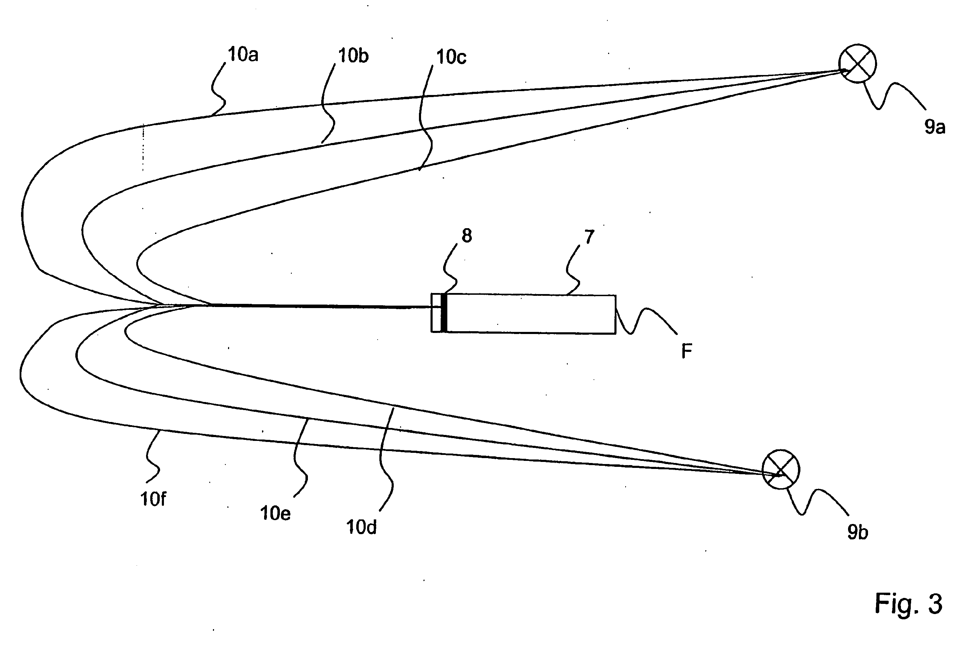

Die Figur 3 lässt eine Draufsicht auf einen beispielhaften Flughafen F mit einer Landebahn 7 und einer Landebahnschwelle 8 erkennen. Weiterhin sind für den Flughafen F zwei gemeinsame Wegpunkte 9a, 9b festgelegt, die beim Anflug eines Luftfahrzeuges 2 auf jeden Fall passiert werden müssen. Ausgehend von diesen gemeinsamen Wegpunkten 9a, 9b sind jeweils Gruppen von Anflugtrajektorien 10a, 10b, 10c, 10d, 10e und 10f festgelegt. Selbstverständlich können beliebig viele Anflugtrajektorien vorgegeben werden. Zur Reduzierung des Rechenaufwands bei der Bestimmung einer optimalen Anflugsequenz sollte die Anzahl jedoch sinnvoll reduziert sein.

Jede Anflugtrajektorie 10 hat eine flugtypspezifisch unterschiedliche Weglänge. Denkbar ist es dabei, dass zwei Anflugtrajektorien zwar eine gleiche Weglänge haben, jedoch bezogen auf einen Flugzeugtyp unter Berücksichtigung der durch die Landeverfahren und den Flugzeugtyp vorgegebenen Geschwindigkeiten keine zwei Anflugtrajektorien mit für einen Flugzeugtyp effektiven gleichen Anflugzeitdauer zwischen Wegpunkt 9 und Landebahnschwelle 8 vordefiniert sind.

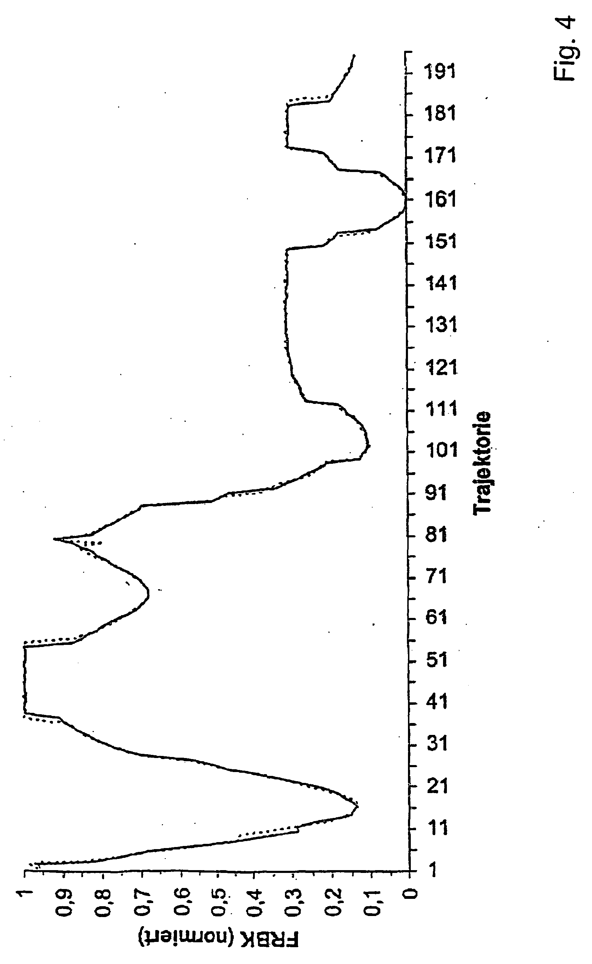

Die Figur 4 lässt ein Diagramm von 195 auf der Abszisse (x-Achse) aufgetragenen unterschiedlichen Anflugtrajektorien mit ansteigenden Restflugzeiten erkennen, für die jeweils auf der Ordinate (y-Achse) die bevölkerungsabhängige Flugroutenbelastungskennzahl FRBK in einer normierten Form aufgetragen ist.

Die Anflugtrajektorien sind hierbei auf einen gemeinsamen Wegpunkt (Metering Fix) eines Flughafens bezogen, beispielsweise des Metering Fix Gedern im Nordosten der Terminal Maneuvering Area (TMA) des Flughafens Frankfurt. Die dargestellte Abfolge von Anflugtrajektorien unterscheidet sich in zeitlicher Hinsicht voneinander, d. h. die erforderliche Zeitdauer zum Anflug auf den einzelnen Anflugtrajektorien ist unterschiedlich und vorliegend mit einem zeitlichen Abstand von zwei Sekunden für eine geplante Zielzeit aufgetragen.

Die Flugroutenbelastungskennzahlen FRBK sind somit zusammen mit dem Flugzeugtyp und der Zielzeit in einer Datenbank bezogen auf die jeweilige Anflugtrajektorie abgelegt (gestrichelte Linie im Diagramm).

Zur Bewertung einer Anflugssequenz wird nun für jedes Luftfahrzeug 2 auf Basis der zugehörigen Zielzeit t_{z} die Lärmbewertung aus der Datenbank DB übernommen. Auf Basis der Zielzeit t_{z}, des Flugzeugtyps und des noch zu fliegenden Weges bis zum Ausgangs-Wegpunkt 9 in der Datenbank DB, auf den sich die Trajektorien 10 in der Datenbank DB beziehen, werden die entsprechenden Trajektorien 10 ausgewählt.
Liegt die geplante Zielzeit t_{z} für ein Luftfahrzeug zwischen zwei in der Datenbank DB angelegten Landezeiten, so wird die zugehörige Fluglärmbewertung approximiert. Die gestrichelte Linie in dem Diagramm zeigt nur die Lärmbewertungen aus der Datenbank DB, während die Einträge der durchgezogenen Linie das Ergebnis einer aufwendigeren Berechnung zeigen, bei der zunächst eine Anflugtrajektorie 10 berechnet und mit dieser anschließend eine Fluglärmbewertung durchgeführt wurde.

Es zeigt sich, dass die zuvor berechneten und in der Datenbank DB abgelegten Umgebungsbelastungskennzahlen für die einzelnen Anflugtrajektorien 10 mit Hilfe der Zielzeit t_{z} an der Landebahnschwelle zugeordnet und damit bereits frühzeitig in der Planung einer optimierten Anflugsequenz berücksichtigt werden können. Damit ist es möglich, die zu erwartende Umgebungsbelastung, insbesondere Fluglärmbelastung, von Anflügen bereits bei der Sequenzplanung zu berücksichtigen und damit gezielt fluglärmreduzierende Anflugstrecken auszuwählen und zur Führung der Luftfahrzeuge 2 zu verwenden.

## Patentansprüche

1. Verfahren zur Anflugführung von Luftfahrzeugen (2), um eine Anzahl von Luftfahrzeugen (2) durch Festlegung einer zur Reduzierung der Umgebungsbelastung optimierten Anflugsequenz mit Zielzeiten (t_{z}) für die Anzahl von Luftfahrzeugen (2) zu vorgegebenen Zielzeiten (t_{z}) nacheinander zur Landung auf einem Flughafen (F) zu führen, **gekennzeichnet durch** die Schritte:
a) Zuordnen einer möglichen Anflugtrajektorie (10) aus der Menge von hinsichtlich der Umgebungsbelastung vorberechneten, vorgegebenen Anflugtrajektorien (10), die jeweils einen Anflugweg von einem gemeinsamen Ausgangs-Wegpunkt (9) zu einem Ziel-Wegpunkt (8) beschreiben, zu jedem Luftfahrzeug (2) in Abhängigkeit von der Restflugzeit (t_{R}), die das Luftfahrzeug (2) für die Strecke zwischen Ausgangs-Wegpunkt (9) und Ziel-Wegpunkt (8) benötigt,
b) Bestimmen einer Umgebungsbelastung **durch** die Anflugsequenz von Luftfahrzeugen (2) bei Nutzung der jeweils zugeordneten Anflugtrajektorien (10) in Abhängigkeit von vorbestimmten Umgebungsbelastungskennzahlen (FRBK) der Anflugtrajektorien (10) als Parameter der Umgebungsbelastung **durch** den Anflug auf dem entsprechenden Anflugweg,
c) Anpassen der Anflugsequenz und Wiederholen der Schritte a) und b) zur Ermittlung einer optimalen Anflugsequenz mit reduzierter Umgebungsbelastung, und
d) Führen der Luftfahrzeuge (2) in Abhängigkeit von der resultierenden belastungsoptimierten Anflugsequenz.

2. Verfahren nach Anspruch 1, **gekennzeichnet durch** Bildung einer möglichen Anflugsequenz mit möglichen zweidimensionalen Anflugwegen für jedes Luftfahrzeug (2) und Ableiten der Zielzeiten (t_{z}) und daraus resultierenden Restflugzeiten (t_{R}) von einem Ausgangs-Wegpunkt (9) zu einem Ziel-Wegpunkt (8) für jedes Luftfahrzeug (2) der Anflugsequenz.

3. Verfahren nach Anspruch 1 oder 2, **gekennzeichnet durch** Bestimmen von tatsächlich zu nutzenden Anflugtrajektorien für die Luftfahrzeuge (2) in Abhängigkeit von den Restflugzeiten (t_{R}) unabhängig von der Menge der vorgegebenen Anflugtrajektorien (10) für die resultierende belastungsoptimierte Anflugsequenz und Führen der Luftfahrzeuge (2) in der Anflugsequenz über die bestimmten Anflugtrajektorien so, dass diese zu den mit der Anflugsequenz verknüpften Zielzeiten (t_{z}) auf der Landebahnschwelle aufsetzen.

4. Verfahren nach einem der Ansprüche 1 bis 3, **dadurch gekennzeichnet, dass** die Umgebungsbelastungskennzahlen (FRBK) der vorgegebenen Anflugtrajektorien (10) in Abhängigkeit von der Geländetopographie und/oder der Bevölkerungsdichte bezogen auf die Anflugtrajektorien (10) bestimmt werden.

5. Verfahren nach einem der Ansprüche 1 bis 4, **dadurch gekennzeichnet, dass** die Umgebungsbelastungskennzahlen der Anflugtrajektorien (10) sowie die Umgebungsbelastung in Abhängigkeit von Luftfahrzeugtypen und/oder meteorologischen Parametern bestimmt wird.

6. Verfahren nach einem der vorhergehenden Ansprüche, **dadurch gekennzeichnet, dass** die vorgegebenen Anflugtrajektorien (10) voneinander unterschiedliche Weglängen zwischen Ausgangs-Wegpunkt (9) und Ziel-Wegpunkt (8) aufweisen und den Restflugzeiten (t_{R}) eineindeutig zugeordnet werden können.

7. Verfahren nach Anspruch 6, **gekennzeichnet durch** Bestimmen der Restflugzeit (t_{R}) in Abhängigkeit von dem Luftfahrzeugtyp.

8. Verfahren nach einem der vorhergehenden Ansprüche, **dadurch gekennzeichnet, dass** für zwei oder mehr festgelegte gemeinsame Ausgangs-Wegpunkte (9a, 9b) des Flughafens (F) jeweils eine Gruppe vordefinierter Anflugtrajektorien (10) pro gemeinsamen Ausgangs-Wegpunkt (9) und Ziel-Wegpunkt (8) vorgegeben werden.

9. Verfahren nach einem der vorhergehenden Ansprüche, **dadurch gekennzeichnet, dass** die Umgebungsbelastungskennzahlen (FRBK) die Lärmbelastung der Umgebung bei Anflug auf einer zugeordneten Anflugtrajektorie (10) beschreiben.

10. Führungseinrichtung (1) zur Anflugführung von Luftfahrzeugen (2), um eine Anzahl von Luftfahrzeugen (2) mit dem Verfahren nach einem der vorhergehenden Ansprüche nacheinander zu mindestens einem Ziel-Wegpunkt (8) eines Flughafens (F) zu führen, **gekennzeichnet durch**
- einen Datenspeicher (5) zum Abspeichern einer Anzahl vordefinierter Anflugtrajektorien (10), die jeweils einen Anflugweg von einem gemeinsamen Ausgangs-Wegpunkt (9) zu einem Ziel-Wegpunkt (8) des Flughafens (F) beschreiben, und den Anflugtrajektorien (10) zugeordneter Umgebungsbelastungskennzahlen (FRBK) als Parameter der Umgebungsbelastung **durch** den Anflug auf dem entsprechenden Anflugweg,
- eine Recheneinheit (4) zur Zuordnung einer möglichen Anflugtrajektorie (10) aus der Menge der vorgegebenen Anflugtrajektorien (10) zu jedem Luftfahrzeug (2) in Abhängigkeit von der Restflugzeit (t_{R}), die das Luftfahrzeug (2) für die Strecke zwischen Ausgangs-Wegpunkt (9) und Ziel-Wegpunkt (8) benötigt, Bestimmung einer Umgebungsbelastung **durch** die Anflugsequenz von Luftfahrzeugen (2) bei Nutzung der jeweils zugeordneten Anflugtrajektorien (10) in Abhängigkeit von den Umgebungsbelastungskennzahlen (FRBK) der Anflugtrajektorien (10), Anpassung der Anflugsequenz und Wiederholung der Schritte der Zuordnung von möglichen Anflugtrajektorien (10) und Bestimmung der Umgebungsbelastung, um eine optimierte Anflugsequenz mit reduzierter Umgebungsbelastung zu ermitteln, und
- einer Führungseinheit (6) zur Führung der Luftfahrzeuge (2) mit der resultierenden belastungsoptimierten Anflugsequenz.

11. Führungseinrichtung (1) nach Anspruch 10, **dadurch gekennzeichnet, dass** die Führungseinheit (6) ein Datenfunkmodul (3) zur Übertragung von mindestens eine Anflugtrajektorie (10) beschreibenden Steuerungssignalen an Luftfahrzeuge (2) hat.

12. Leiteinrichtung (1) nach Anspruch 10 oder 11, **dadurch gekennzeichnet, dass** die Umgebungsbelastungskennzahlen (FRBK) die Lärmbelastung der Umgebung bei Anflug auf einer zugeordneten Anflugtrajektorie (10) beschreiben.

## Claims

1. Method for approach guidance for aircraft (2), in order to guide a number of aircraft (2) successively to land at an airport (F) by definition of an approach sequence, which is optimized in order to reduce the environmental disturbance, with destination times (t_{z}) for the number of aircraft (2) at predetermined destination times (t_{z}), **characterized by** the following steps:
a) allocation of one possible approach trajectory (10) from the set of predetermined approach trajectories (10) whose environmental disturbance is calculated in advance and which each describe an approach path from a common initial waypoint (9) to a destination waypoint (8), for each aircraft (2) as a function of the remaining flying time (t_{R}) which that aircraft (2) requires to travel between the initial waypoint (9) and the destination waypoint (8),
b) definition of an environmental disturbance resulting from the approach sequence of aircraft (2) when using the respectively allocated approach trajectories (10), as a function of predetermined environmental disturbance characteristic figures (FRBK) of the approach trajectories (10) as a parameter for the environmental disturbance caused by the approach on the corresponding approach path,
c) adaptation of the approach sequence and repetition of steps a) and b) in order to determine an optimum approach sequence with reduced environmental disturbance, and
d) guidance of the aircraft (2) as a function of the resultant load-optimized approach sequence.

2. Method according to Claim 1, **characterized by** formation of one possible approach sequence with possible two-dimensional approach paths for each aircraft (2), and derivation of the destination times (t_{z}) and remaining flying times (t_{R}) resulting therefrom from an initial waypoint (9) to a destination waypoint (8) for each aircraft (2) in the approach sequence.

3. Method according to Claim 1 or 2, **characterized by** definition of approach trajectories actually to be used for the aircraft (2) as a function of the remaining flying times (t_{R}) independently of the set of predetermined approach trajectories (10) for the resultant load-optimized approach sequence, and guidance of the aircraft (2) in the approach sequence over the defined approach trajectories such that they land on the runway threshold at the destination times (t_{z}) linked to the approach sequence.

4. Method according to one of Claims 1 to 3, **characterized in that** the environmental disturbance characteristic figures (FRBK) of the predetermined approach trajectories (10) are defined as a function of the terrain topology and/or the population density relating to the approach trajectories (10).

5. Method according to one of Claims 1 to 4, **characterized in that** the environmental disturbance characteristic figures of the approach trajectories (10) and the environmental disturbance are determined as a function of aircraft types and/or meteorological parameters.

6. Method according to one of the preceding claims, **characterized in that** the predetermined approach trajectories (10) have mutually different path lengths between the initial waypoint (9) and the destination waypoint (8), and can be unambiguously associated with the remaining flying times (t_{R}).

7. Method according to Claim 6, **characterized by** definition of the remaining flying time (t_{R}) as a function of the aircraft type.

8. Method according to one of the preceding claims, **characterized in that** one group of predefined approach trajectories (10) is in each case predetermined for each common initial waypoint (9) and destination waypoint (8) for two or more defined common initial waypoints (9a, 9b) of the airport (F).

9. Method according to one of the preceding claims, **characterized in that** the environmental load characteristic figures (FRBK) describe the noise load on the environment when approaching on an allocated approach trajectory (10).

10. Guidance device (1) for approach guidance of aircraft (2), in order to guide a number of aircraft (2) successively to at least one destination waypoint (8) of an airport (F) using the method according to one of the preceding claims, **characterized by**
- a data memory (5) for storage of a number of predefined approach trajectories (10) which each describe one approach path from a common initial waypoint (9) to a destination waypoint (8) of the airport (F), and environmental disturbance characteristic figures (FRBK), which are associated with the approach trajectories (10), as a parameter of the environmental disturbance caused by the approach on the corresponding approach path,
- a computation unit (4) for allocation of one possible approach trajectory (10) from the set of the predetermined approach trajectories (10) to each aircraft (2), as a function of the remaining flying time (t_{R}) which that aircraft (2) requires to travel between the initial waypoint (9) and the destination waypoint (8), definition of an environmental disturbance caused by the approach sequence of aircraft (2) when using the respectively allocated approach trajectories (10), as a function of the environmental disturbance characteristic figures (FRBK) of the approach trajectories (10), adaptation of the approach sequence and repetition of the steps of allocation of possible approach trajectories (10) and definition of the environmental disturbance, in order to determine an optimized approach sequence with reduced environmental disturbance, and
- a guidance unit (6) for guidance of the aircraft (2) using the resultant, load-optimized approach sequence.

11. Guidance device (1) according to Claim 10, **characterized in that** the guidance unit (6) has a data radio module (3) for transmission of control signals which describe at least one approach trajectory (10) to aircraft (2).

12. Control device (1) according to Claim 10 or 11, **characterized in that** the environmental disturbance characteristic figures (FRBK) describe the noise load on the environment when approaching on an allocated approach trajectory (10).

## Revendications

1. Procédé de guidage d'approche d'aéronefs (2) destiné à guider un certain nombre d'aéronefs (2) par la détermination d'une séquence d'approche optimisée pour réduire la pollution environnementale avec des temps cibles (t_{z}) pour le nombre d'aéronefs (2) par rapport à des temps cibles (t_{z}) fixés, l'un après l'autre pour l'atterrissage sur un aéroport (F), **caractérisé par** les étapes suivantes :
a) attribution d'une trajectoire d'approche (10) possible, à partir de la quantité de trajectoires d'approche (10) fixées, précalculées au regard de la pollution environnementale, qui décrivent respectivement un trajet d'approche d'un point de cheminement de départ commun (9) à un point de cheminement cible (8), à chaque aéronef (2) en fonction du temps de vol restant (t_{R}) dont l'aéronef (2) a besoin pour la distance entre le point de cheminement de départ (9) et le point de cheminement cible (8),
b) détermination d'une pollution environnementale par la séquence d'approche d'aéronefs (2) en utilisant les trajectoires d'approche (10) respectivement attribuées, en fonction de nombres caractéristiques de pollution environnementale (FRBK) prédéterminés des trajectoires d'approche (10) comme paramètres de la pollution environnementale par l'approche sur le trajet d'approche correspondant,
c) adaptation de la séquence d'approche et répétition des étapes a) et b) pour déterminer une séquence d'approche optimale avec une pollution environnementale réduite, et
d) guidage des aéronefs (2) en fonction de la séquence d'approche résultante optimisée pour la pollution.

2. Procédé selon la revendication 1, **caractérisé par** la formation d'une séquence d'approche possible avec des trajets d'approche bidimensionnels possibles pour chaque aéronef (2) et déduction des temps cibles (t_{z}) et des temps de vol restants (t_{R}) qui en résultent d'un point de cheminement de départ (9) à un point de cheminement cible (8) pour chaque aéronef (2) de la séquence d'approche.

3. Procédé selon la revendication 1 ou 2, **caractérisé par** la détermination de trajectoires d'approche à utiliser de fait pour les aéronefs (2), en fonction des temps de vol restants (t_{R}) indépendamment de la quantité de trajectoires d'approche (10) fixées pour la séquence d'approche résultante optimisée pour la pollution, et guidage des aéronefs (2) dans la séquence d'approche sur les trajectoires d'approche fixées, de sorte que ceux-ci se posent sur le seuil de piste d'atterrissage par rapport aux temps cibles (t_{z}) liés à la séquence d'approche.

4. Procédé selon l'une des revendications 1 à 3, **caractérisé en ce que** les nombres caractéristiques de pollution environnementale (FRBK) des trajectoires d'approche (10) fixées sont déterminés en fonction de la topographie du terrain et/ou de la densité de population rapportée(s) aux trajectoires d'approche (10).

5. Procédé selon l'une des revendications 1 à 4, **caractérisé en ce que** les nombres caractéristiques de pollution environnementale (FRBK) des trajectoires d'approche (10) et la pollution environnementale sont déterminés en fonction des types d'aéronefs et/ou de paramètres météorologiques.

6. Procédé selon l'une des revendications précédentes, **caractérisé en ce que** les trajectoires d'approche (10) fixées présentent des longueurs de trajet différentes l'une de l'autre entre le point de cheminement de départ (9) et le point de cheminement cible (8) et peuvent être attribuées de manière biunivoque aux temps de vol restants (t_{R}).

7. Procédé selon la revendication 6, **caractérisé par** la détermination du temps de vol restant (t_{R}) en fonction du type d'aéronef.

8. Procédé selon l'une des revendications précédentes, **caractérisé en ce que** pour deux points de cheminement communs ou plus (9a, 9b) définis de l'aéroport (F), respectivement un groupe de trajectoires d'approche (10) prédéfinies est fixé par point de cheminement de départ (9) commun et point de cheminement cible (8).

9. Procédé selon l'une des revendications précédentes, **caractérisé en ce que** les nombres caractéristiques de pollution environnementale (FRBK) décrivent la pollution sonore de l'environnement lors de l'approche sur une trajectoire d'approche (10) attribuée.

10. Dispositif de guidage (1) destiné au guidage d'approche d'aéronefs (2), pour guider un certain nombre d'aéronefs (2) l'un après l'autre en direction au moins d'un point de cheminement cible (8) d'un aéroport (F), avec le procédé selon l'une des revendications précédentes, **caractérisé par**
- une mémoire de données (5) pour sauvegarder un nombre de trajectoires d'approche (10) fixées qui décrivent respectivement un trajet d'approche d'un point de cheminement de départ (9) commun à un point de cheminement cible (8), et des nombres caractéristiques de pollution environnementale (FRBK) attribués aux trajectoires d'approche (10) comme paramètres de la pollution environnementale par l'approche sur le trajet d'approche correspondant,
- une unité de calcul (4) destinée à attribuer une trajectoire d'approche (10) possible, à partir de la quantité de trajectoires d'approche (10) fixées, à chaque aéronef (2) en fonction du temps de vol restant (t_{R}) dont l'aéronef (2) a besoin pour la distance entre le point de cheminement de départ (9) et le point de cheminement cible (8), à déterminer une pollution environnementale par la séquence d'approche d'aéronefs (2) en utilisant les trajectoires d'approche (10) respectivement attribuées, en fonction des nombres caractéristiques de pollution environnementale (FRBK) des trajectoires d'approche (10), à adapter la séquence d'approche et à répéter les étapes d'attribution de trajectoires d'approche (10) possibles et à déterminer la pollution environnementale pour calculer une séquence d'approche optimale avec une pollution environnementale réduite, et
- une unité de guidage (6) destinée au guidage des aéronefs (2) avec la séquence d'approche résultante optimisée pour la pollution.

11. Dispositif de guidage (1) selon la revendication 10, **caractérisé en ce que** l'unité de guidage (6) a un module radio de données (3) pour transmettre aux aéronefs (2) des signaux de commande décrivant au moins une trajectoire d'approche (10).

12. Dispositif directeur (1) selon la revendication 10 ou 11, **caractérisé en ce que** les nombres caractéristiques de pollution environnementale (FRBK) décrivent la pollution sonore de l'environnement lors de l'approche sur une trajectoire d'approche (10) attribuée.
